## Europäisches Patentamt
## European Patent Office
## Office européen des brevets

(11) Publication number: **0 100 106 B1**

(12) **EUROPEAN PATENT SPECIFICATION**

(45) Date of publication of patent specification: **28.06.89**

(51) Int. Cl.⁴: $H\ 04\ L\ 9/02$

(21) Application number: **83107443.0**

(22) Date of filing: **28.07.83**

(54) **Communications systems and transmitters and receivers including scrambling devices.**

(30) Priority: **28.07.82 US 402702**

(43) Date of publication of application:
**08.02.84 Bulletin 84/06**

(45) Publication of the grant of the patent:
**28.06.89 Bulletin 89/26**

(84) Designated Contracting States:
**DE FR**

(56) References cited:
**EP-A-0 032 107**
**DE-B-2 706 421**
**US-A-3 291 908**
**US-A-3 659 046**

**FIFTH INTERNATIONAL CONFERENCE ON DIGITAL SATELLITE COMMUNICATIONS, 23-26 March 1981, Genoa, IT, pages 243-249, IEEE, New York, US; J.C. BIC et al.: "Privacy over digital satellite links"**

(73) Proprietor: **COMMUNICATIONS SATELLITE CORPORATION**
**950 L'Enfant Plaza, S.W.**
**Washington, D.C. 20024 (US)**

(72) Inventor: **Ragavan, Vivek**
**5049 Netherstone Court**
**Columbia Maryland 21045 (US)**
Inventor: **Wolfe, William H.**
**5958 Oakland Park Drive**
**Burke Virginia (US)**

(74) Representative: **Lehn, Werner, Dipl.-Ing. et al**
**Hoffmann, Eitle & Partner Patentanwälte**
**Arabellastrasse 4**
**D-8000 München 81 (DE)**

Courier Press, Leamington Spa, England.

# Description

The present invention relates to TDMA communications systems, to data security systems for TDMA systems and to method of communicating secure data in a TDMA system.

In conventional TDMA systems where data security is desired, data encryption equipment has been placed at the data source with decryption equipment used at the receiver. For data rates of 64 kilobits or less, encryption is possible using commercial encryption equipment operating in a well known manner in accordance with the National Bureau of Standard (NBS) Data Encryption Standard (DES). However, even at such a relatively low bit rate, some situations involve a large number of 64 kilobit data streams each of which must be encrypted, thus requiring a large number of encryption devices and increasing system costs and complexity.

Until recently, data security in TDMA systems has not been a widespread concern and the few applications in which it has been necessary may have justified its expense and attendant performance limitations. However, with increasingly widespread use of TDMA communications, for example in the commercial market-place where sensitive data such as bank transfer information and petroleum exploratory data is being transmitted via TDMA links, the need to provide data security is becoming increasingly important. Users of TDMA systems now desire to have the TDMA transmission bulk encrypted in accordance with the National Bureau of Standards DES, but for domestic TDMA systems this may necessitate a set of hardware to encrypt data at either 30 or 60 megabits. Such equipment is not readily available.

Rather than utilize encryption equipment, a measure of security can be provided by scrambling the TDMA transmission. A common scrambling technique is to generate a pseudo-random (PN) number sequence and to mix this sequence with the data bit stream, e.g. via an Exclusive OR gate. The scrambled data is then modulated and transmitted with energy that is substantially equally distributed across the bandwidth of the transmission channel. A descrambler utilizing an identical PN sequence generator is located at the receiver and utilizes an identical PN sequence to extract the information data. In order to accurately extract the information, however, the PN sequence generators at the data source and receiver must be operated in synchronism, and this is assured by periodically resetting both of the PN sequence generators to a known state. In typical TDMA systems the PN sequence generators are loaded with an all ones pattern at the beginning of a sequence, with the sequence being started either at the beginning of a TDMA frame and running continuously for the duration of the frame or at the beginning of each burst and running for the duration of each burst.

While such scrambling techniques do provide a measure of security, the protection provided is not sufficient for sensitive information. An unauthorized user with the same receiver hardware can reset his own PN sequence generator to enable decryption of the data. Even if he does not know from the start the value to which the sequence generator should be reset each time, if the reset value is always the same he need only collect enough data to break the code once, after which he will have no trouble in thereafter receiving and descrambling all transmitted information.

A slight improvement in security is provided by a system such as disclosed in U.S. Patent 3,659,046 to Angeleri et al. In that system, the PN sequence generators in the transmitter and receiver are concurrently reset in order to maintain synchronization, but the resetting is performed in response to a randomly generated pulse at the transmitter. Thus, an unauthorised user, even knowing the starting state to which the scrambler is to be reset, would have the additional problem of determining exactly at what times the resetting is to occur. Although this does provide an additional measure of security, the system would not be protected from an unauthorized user having the same receiver hardware. Such an unauthorized user would have his own PN sequence generator reset at the proper times by merely detecting the reset pulse.

US—A—3291903 discloses a process for coding of messages in which the starting state of the PN sequence generators is reset at intervals to a variable state. However, the disclosed process is not discussed in connection with TDMA systems and no suggestion is made of selectively scrambling parts of the data to be transmitted.

It is an object of this invention to provide a TDMA communications system utilising a scrambling/descrambling technique which is relatively secure even from an unauthorized user having the same receiver hardware.

According to one aspect of the invention, there is provided a data security system in a Time Division Multiple Access (TDMA) communications system of the type wherein communications signals are transmitted from and received at several stations, said communications signals being transmitted in the form of successive frames and including fixed portions which occur at respective fixed positions within each frame and non-fixed portions which do not occur at fixed positions within each frame, said fixed portions further including random portions which contain random data and non-random portions which contain non-random data, and wherein transmitted data in said communications signals is scrambled before transmission and received data in said communications signals is descrambled after reception, said data security system comprising scrambling and descrambling circuits for respectively scrambling said transmitted data and descrambling said received data, each circuit comprising a PN sequence generator for generating scrambling sequences, initial scrambling sequence value storage means, means for setting said PN sequence generator to an initial state in accordance with an initial value stored in said initial scrambling sequence value storage means, a source of data, and a mixer for mixing the data in response to the scrambling sequences, said scrambling sequences beginning at each setting of said PN sequence generator from said initial value, and wherein each said circuit includes means for changing the stored initial scrambling sequence value in said initial value storage means to a new stored initial scrambling sequence value which is identical for each said circuit, such that a new sequence is produced by each PN sequence generator that begins with such new stored initial scrambling sequence value, said system further comprising means at at least one of said stations for generating said new initial scrambling sequence value and means for transmitting said generated new initial scrambling sequence value in an unscrambled state to remaining ones of said stations, said data security system scrambling said non-fixed portions and said random portions but transmitting said non-random portions in an unscrambled state.

According to a further aspect of the invention, there is provided a data security system in a Time Division Multiple Access (TDMA) communications system of the type having plural stations wherein communications signals are transmitted and received by plural stations, said communications signals being transmitted in the form of successive frames and including fixed portions which occur at respective fixed positions within each frame and non-fixed portions which do not occur at fixed positions within each frame, said fixed portions further including random portions which contain random data and non-random portions which contain non-random data, and wherein original data to be transmitted in said communications signals is scrambled at one station, and received at another station, the received scrambled data being descrambled at said another station for recovery of said original data, said data security system having scrambling and descrambling circuits at each station, said scrambling and descrambling circuits each comprising:

storage register means for receiving and storing an initial scrambling sequence value, the value of said initial scrambling sequence value at each scrambling circuit changing in synchronism with the changing of said value at each descrambling circuit;

a PN sequence generator for generating PN scrambling sequences, each PN scrambling sequence commencing from the initial scrambling sequence value presently stored in said storage register means, the PN sequence generators in each of said scrambling and descrambling circuits generating the same PN scrambling sequence for any given initial scrambling sequence value; and

means for loading the initial scrambling sequence values from the storage register means of each scrambling circuit into its respective PN sequence generator in synchronism with the loading of the same initial scrambling sequence value into the PN sequence generator of each descrambling circuit;

said system further comprising means at at least one of said stations for generating said new initial scrambling sequence value, and means for transmitting said generated new initial scrambling sequence value in an unscrambled state to others of said stations, said data security system scrambling said non-fixed portions and said random portions but transmitting said non-random portions in an unscrambled state.

According to a further aspect of the invention, there is provided a method of communicating secure data in a Time Division Multiple Access (TDMA) communications system of the type wherein communications signals are transmitted and received by plural stations in said system, said method being of the type comprising the steps of scrambling original data, transmitting said scrambled data in said communications signals, and descrambling said scrambled data to recover said original data, said scrambling and descrambling steps each comprising the steps of generating identical PN scrambling sequences from an initial scrambling sequence value and mixing the generated scrambling sequences with original and scrambled data to obtain said scrambled and original data, respectively, said generating step for both scrambling and descrambling including the steps of storing identical initial scrambling values, generating a new initial scrambling sequence value at a station in said communications system, transmitting said new initial scrambling sequence value in an unscrambled state to other stations in said communications system, and replacing said stored initial scrambling sequence value with said new initial scrambling sequence value, wherein said communications signals are transmitted in the form of successive frames including fixed portions which occur at respective fixed portions within each frame and non-fixed portions which do not occur at fixed positions within each frame, said fixed portions further including random portions which contain random data and non-random portions which contain non-random data, and wherein said system scrambles said non-fixed portions and said random portions but transmits said non-random portions in an unscrambled state.

The invention will be more clearly understood from the following description of a preferred embodiment in conjunction with the accompanying drawings, in which:

Figure 1 is a block diagram of components of a scrambler circuit arrangement according to the present invention;

Figure 2 is a block diagram of components of a descrambler circuit arrangement according to the present invention; and

Figure 3 is a diagram of TDMA frame architecture showing the locations of the privacy channel in which a starting state is to be transmitted.

The invention will be described in the context of a TDMA system of the type having a centrally controlled network with a Network Control Processor (NCP) at the reference terminal providing all command information required to define the TDMA frame structure. However, it should be appreciated that in its most basic form the invention is applicable to scrambled transmissions between any two stations.

As described above, it is common in a TDMA system to scramble the data using a PN sequence generator, with the PN sequence generators at the transmitter and receiver being periodically reset. The resetting may occur once every frame or once every burst, or it may even occur at random intervals as in the above-cited U.S. Patent 3,659,046 to Angeleri et al. The present invention is applicable to any and all of these systems regardless of the frequency with which the sequence generator is to be restarted. In its most basic form, the invention is directed to a technique for adjusting the value at which the scrambler and descrambler PN sequence generators will be restarted.

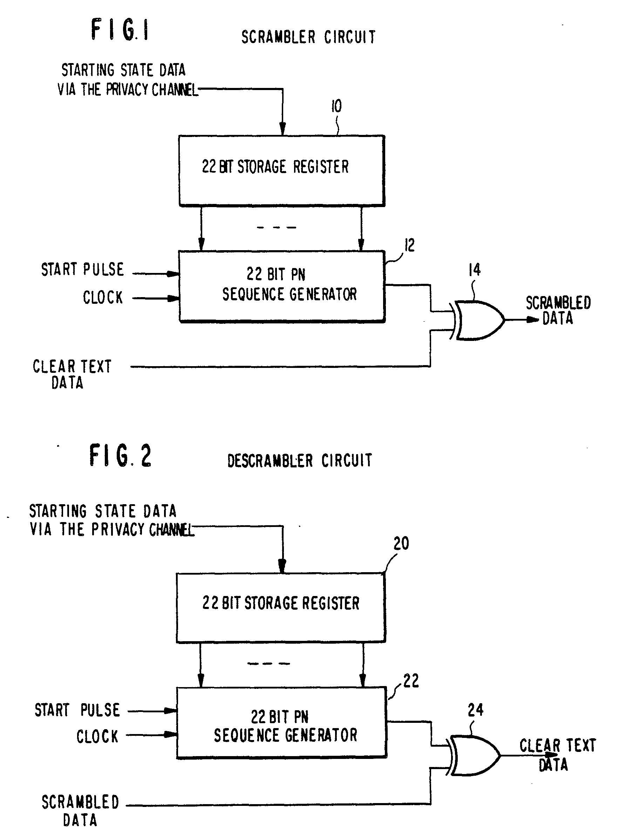

Figure 1 is a brief block diagram of the essential components of a scrambler circuit according to the present invention, and Figure 2 is a similar block diagram of a descrambler circuit. In the scrambler circuit of Figure 1, a storage register 10, which may for example comprise a 22-bit storage register, stores the starting state data which is then loaded into a 22-bit PN sequence generator 12 in response to a start pulse. Having been loaded with this starting state, the sequence generator then proceeds to generate its PN sequence in response to a clock signal, with the PN sequence being combined with clear text data in an Exclusive OR (EOR) gate 14. In the descrambler circuit of Figure 2, a similar 22-bit storage register 20 stores a starting state which is loaded into an identical 22-bit PN sequence generator 22 in response to a start pulse, and the PN sequence output from the sequence generator 22 is combined with the scrambled data in EOR gate 24 to recover the clear text data.

The generation of the start and clock pulses and the scrambling and unscrambling of the data via EOR gates are conventional and well known and need not be described in further detail. Further, the operation of PN sequence generators is also well understood in the art and the sequence generator itself may operate according to any of a number of well known algorithms. The distinctive feature of the present invention is that, whereas in a conventional system the PN sequence generators 12 and 22 would be reset to fixed starting states in response to the start pulses, the present invention provides registers 10 and 20 for storing a variable starting state value and the sequence generators according to the present invention are instead set not to fixed values but to the values stored in respective storage register 10 and 20, which storage values may be periodically changed.

For the purposes of this description, as stated above, the invention is assumed to be utilized in a centrally controlled TDMA network having a plurality of stations including at least one reference terminal. In such a case, the 22-bit number to be stored in the registers 10 and 20 at each terminal is preferably transmitted from the NCP to each local terminal in the network. The 22-bit number is then loaded into the PN sequence generators in each circuit when that circuit is initialized at the beginning of a TDMA frame, at the beginning of a TDMA burst, or randomly as may be desired. For an unauthorized user to correctly receive the information, he must load his own PN sequence generator with the same 22-bit number at the same time. There are $2^{22}$, or more than 4 million, different numbers which could be used to start the scrambling and descrambling processes, and the unauthorized user must not only determine the particular number which will correctly start his descrambler but must also make this determination as often as the contents of the registers 10 and 20 are changed. This will present at least a substantial obstacle to unauthorized interception of the transmission.

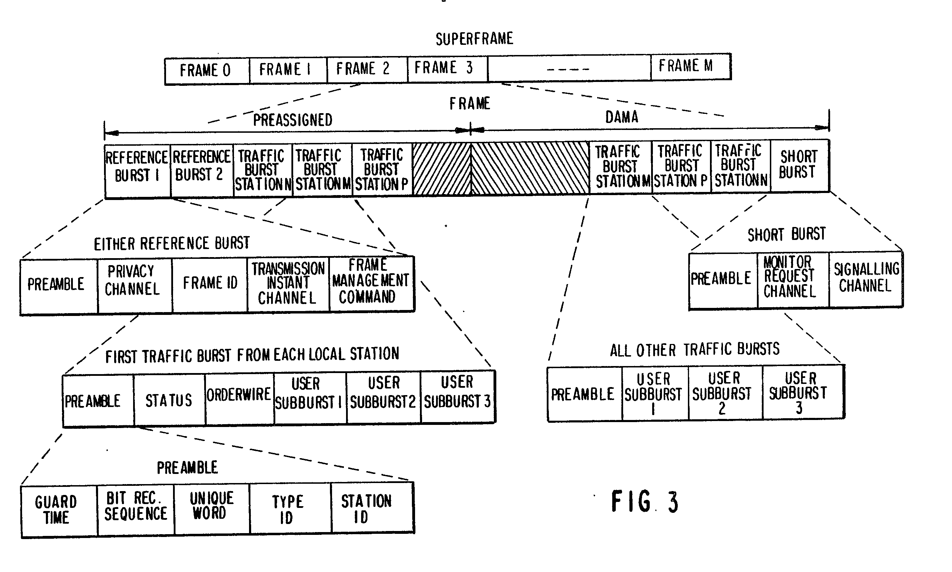

The 22-bit number to be stored in the registers 10 and 20 may preferably be transmitted from the NCP in the privacy channel. Figure 3 is a diagram of the TDMA frame architecture showing the privacy channel transmitted in reference burst 1 immediately following the preamble. In order for each of the local terminals to receive the privacy channel, the privacy channel is transmitted with the scrambling circuits disabled. This does present a problem in that unauthorized users will also be listening to the privacy channel, and some means is therefore needed to secure the privacy channel from unauthorized reception. This may be done by encrypting the privacy channel using the National Bureau of Standards data encryption standard. The TDMA system in which the present invention is used may utilize the electronic code book mode as described in Federal Standard 1026, and this mode may be implemented using either a master key only or a master key plus secondary key to decrypt the privacy channel. This type of encryption/decryption is well understood in the art and need not be described in detail here. Further, it should be noted that, although the electronic code book mode may be used in the TDMA system employing this invention, the invention is not constrained to the use of such an encryption mode, and other techniques such as the cipher feedback mode or the cipher block chaining mode as described in Federal Standard 1026 may be used. Indeed, virtually any encryption/descryption technique could be used without departing from the essential nature of the invention.

The network control processor via the privacy channel has the means to send new starting states for the scrambling and descrambling circuits to each of the local stations in the TDMA network. Depending on the degree of system-wide security desired, new starting states may be transmitted at intervals from, e.g., every five minutes to once per day. Where a high degree of security is required, short intervals between transmission of new starting states may be employed so that, by the time the unauthorized user could break the code, a new code would be implemented. This process can be totally automatic within the NCP, with the user, i.e., the overall system operator, only having to specify the interval between the sending of starting state updates to the subscribers.

The 64 bits in the privacy channel can be used to transmit the new starting state (a 22-bit number) plus the necessary coordination information so that the change of starting states at all local terminals in the TDMA network will occur in the same frame as seen by the satellite. This coordination is required so that no frames are lost and so that the change of starting states of the scrambling and descrambling circuits is not observable by the system user.

With the configuration as described above, the unauthorized user, having been denied access to the contents of the privacy channel, must attempt to decode the starting state of the scrambler on the basis of the scrambled frame data. This process is made difficult, since (1) all channels that are scrambled either contain data of a random nature or do not occupy fixed positions in the frame, and channels which both occupy fixed positions in the frame and contain data that is not random, are not scrambled; and (2) in the TDMA system, the frame configuration is constantly changing to meet the dynamic traffic requirements. The unauthorized user having no knowledge of the present frame configuration would, therefore, find it difficult to accumulate a sufficiently large data base to allow estimation of the starting state in the period between changes of this state.

With the relatively simple configuration described above, a degree of security is provided which, although not as secure as encrypted data, is adequate for many applications and is certainly much easier and less costly to implement.

Briefly, the present invention comprises a method and apparatus by which the PN sequence generators in the transmitter and receiver are periodically set to identical but variable starting states. A starting state value to be used at the transmitter is transmitted over a privacy channel to the receiver so that the receiver knows the same starting state used at the transmitter. In a preferred embodiment of the invention, the transmitter and receiver each include multi-bit storage registers for storing a particular starting state. The contents of this starting state register can be periodically changed, and setting of the PN sequence generators at the scrambler and descrambler is performed by loading the stored starting state value into the PN sequence generator in response to a start, or load, pulse which can be generated and transmitted in a conventional manner. The starting state value, which is generated at the transmitter, can be transmitted to the receiver over a privacy channel and can be preferably encrypted in accordance with the well known DES.

## Claims

1. A data security system in a Time Division Multiple Access (TDMA) communications system of the type wherein communications signals are transmitted from and received at several stations, said communications signals being transmitted in the form of successive frames and including fixed portions which occur at respective fixed positions within each frame and non-fixed portions which do not occur at fixed positions within each frame, said fixed portions further including random portions which contain random data and non-random portions which contain non-random data, and wherein transmitted data in said communications signals is scrambled before transmission and received data in said communications signals is descrambled after reception, said data security system comprising scrambling (10, 12, 14) and descrambling (20, 22, 24) circuits for respectively scrambling said transmitted data and descrambling said received data, each circuit comprising a pseudo-random number, PN, sequence generator (12, 22) for generating scrambling sequences, initial scrambling sequence value storage means (10, 20), means for setting said PN sequence generator (12, 22) to an initial state in accordance with an initial value stored in said initial scrambling sequence value storage means (10, 20), a source of data, and a mixer (14, 24) for mixing the data in response to the scrambling sequences, said scrambling sequences beginning at each setting of said PN sequence generator (12, 22) from said initial value, and wherein each said circuit includes means for changing the stored initial scrambling sequence value in said initial value storage means (10, 20) to a new stored initial scrambling sequence value which is identical for each said circuit, such that a new sequence is produced by each PN sequence generator that begins with such new stored initial scrambling sequence value, said system further comprising means at at least one of said stations for generating said new initial scrambling sequence value and means for transmitting said generated new initial scrambling sequence value signals in an unscrambled state to remaining ones of said stations, said data security system scrambling said non-fixed portions and said random portions but transmitting said non-random portions in an unscrambled state.

2. A data security system according to claim 1, wherein the new initial scrambling sequence value is transmitted in an encrypted form.

3. A data security system according to claim 2, wherein said new initial scrambling sequence value is transmitted in a privacy channel in said frame.

4. A data security system in a Time Division Multiple Access (TDMA) communications system of the type having plural stations wherein communications signals are transmitted and received by plural stations, said communications signals being transmitted in the form of successive frames and including fixed portions which occur at respective fixed positions within each frame and non-fixed portions which do not occur at fixed positions within each frame, said fixed portions further including random portions which contain random data and non-random portions which contain random data and non-random portions which contain non-random data, and wherein original data to be transmitted in said communications signals is scrambled at one station, and received at another station, the received scrambled data being descrambled at said another station for recovery of said original data, said data security system having scrambling and descrambling circuit at each station, said scrambling and descrambling circuits each comprising:

storage register means (10, 20) for receiving and storing an initial scrambling sequence value, the value of said initial scrambling sequence value at each scrambling circuit changing in synchronism with the changing of said value at each descrambling circuit;

a pseudo-random number, PN, sequence generator (12, 22) for generating PN scrambling sequences, each PN scrambling sequence commencing from the initial scrambling sequence value presently stored in said storage register means (10, 20), the PN sequence generators (12, 22) in each of said scrambling and descrambling circuits generating the same PN scrambling sequence for any given initial scrambling sequence value; and

means for loading the initial scrambling sequence values from the storage register means (10, 20) of each scrambling circuit into its respective PN sequence generator (12, 22) in synchronism with the loading of the same initial scrambling sequence value into the PN sequence generator (12, 22) of each descrambling circuit;

said system further comprising means at at least one of said stations for generating said new initial scrambling sequence value, and means for transmitting said generated new initial scrambling sequence value in an unscrambled state to others of said stations, said data security system scrambling said non-fixed portions and said random portions but transmitting said non-random portions in an unscrambled state.

5. A method of communicating secure data in a Time Division Multiple Access (TDMA) communications system of the type wherein communications signals are transmitted and received by plural stations in said system, said method being of the type comprising the steps of scrambling original data, transmitting said scrambled data in said communications signals, and descrambling said scrambled data to recover said original data, said scrambling and descrambling steps each comprising the steps of generating identical PN scrambling sequences from an initial scrambling sequence value and mixing the generated scrambling sequences with original and scrambled data to obtain said scrambled and original data, respectively, said generating step for both scrambling and descrambling including the steps of storing identical initial scrambling sequence values, generating a new initial scrambling sequence value at a station in said communications system, transmitting said new initial scrambling sequence value in an unscrambled state to other stations in said communications system, and replacing said stored initial scrambling sequence value with said new initial scrambling sequence value, wherein said communications signals are transmitted in the form of successive frames including fixed portions which occur at respective fixed portions within each frame and non-fixed portions which do not occur at fixed positions within each frame, said fixed portions further including random portions which contain random data and non-random portions which contain non-random data, and wherein said system scrambles said non-fixed portions and said random portions but transmits said non-random portions in an unscrambled state.

6. A method as claimed in claim 5, wherein said step of transmitting said new initial scrambling sequence value comprises the step of encrypting said new initial scrambling sequence value at a station in said communications system and transmitting the encrypted new initial scrambling sequence value to other stations in said communications system in an unscrambled state.

7. A data security system according to claim 1, wherein said communications system transmits reference signals in addition to said communication signals, and wherein said generated new initial scrambling sequence value is transmitted in said reference signals.

8. A data security system according to claim 4, wherein reference signals are transmitted and received by said plural stations in addition to said communications signals, and wherein said generated new initial scrambling sequence value is transmitted in said reference signals.

9. A method as claimed in claim 5, wherein reference signals are transmitted and received by said plural stations in addition to said communications signals, and wherein said new initial scrambling sequence value is transmitted in said reference signals.

**Patentansprüche**

1. Datensicherheitssystem mit einem Übertragungssystem mit zeitmehrfachem Zugriff (TDMA), worin Übertragungssignale von mehreren Stationen gesendet und an mehreren Stationen empfangen werden, wobei die Übertragungssignale in Form von aufeinanderfolgenden Rahmen gesendet werden und fixierte Abschnitte enthalten, die an entsprechenden fixierten Stellen innerhalb jedes Rahmens auftreten, und nicht fixierte Abschnitte enthalten, die nicht an fixierten Stellen innerhalb jedes Rahmens auftreten, wobei die fixierten Abschnitte weiterhin Zufallsabschnitte, die Zufallsdaten enthalten, und Nichtzufallsabschnitte einschließen, die Nichtzufallsdaten enthalten, und worin übertragene Daten in den Übertragungssignalen vor der Übertragung verschlüsselt werden und empfangene Daten in den Übertragungssignalen nach Empfang entschlüsselt werden, wobei das Datensicherheitssystem Verschlüsselungs- (10, 12, 14) und Entschlüsselungs- (20, 22, 24) Schaltungen zum jeweiligen Verschlüsseln der übertragenen Daten und Entschlüsseln der empfangenen Daten, wobei jede Schaltung einen Pseudozufallszahl-PN-Reihenfolgegenerator (12, 22) zum Erzeugen von Verschlüsselungsreihenfolgen, Speichermittel (10, 20) für den anfänglichen Verschlüsselungsreihenfolgewert, Mittel zum Einstellen des PN-Reihenfolgegenerators (12, 22) auf einen Anfangszustand entsprechend einem in den Speichermitteln (10, 20) für den anfänglichen Verschlüsselungsreihenfolgewert gespeicherten Anfangswert, eine Quelle für Daten, und einen Mischer (14, 24) zum Mischen der Daten im Ansprechen auf die Verschlüsselungsreihenfolgen enthält, wobei die Verschlüsselungsreihenfolgen bei jedem Einstellen des PN-Reihenfolgegenerators (12, 22) von Anfangswert anfangen und worin jede der Schaltungen Mittel zum Ändern des gespeicherten anfänglichen Verschlüsselungsreihenfolgewerts in den Anfangswertspeichermitteln (10, 20) auf einen neuen gespeicherten anfänglichen Verschlüsselungsreihenfolgewert enthält, der identisch für jede der Schaltungen ist, so daß eine neue Reihenfolge durch jeden PN-Reihenfolgegenerator erzeugt wird, die mit einem solchen neuen gespeicherten anfänglichen Verschlüsselungsreihenfolgewert anfängt, wobei das System weiterhin Mittel in wenigstens einer der Stationen zum Erzeugen des neuen anfänglichen Verschlüsselungsreihenfolgewerts und Mittel zum Übertragen des erzeugten neuen anfänglichen Verschlüsselungsreihenfolgewertsignals in einem nicht verschlüsselten Zustand zu verbleibende der Stationen enthält, wobei das Datensicherheitssystem die nicht fixierten Abschnitte und die Zufallsabschnitte verschlüsselt, aber die Nichtzufallsabschnitte in einem nicht verschlüsselten Zustand überträgt.

2. Datensicherheitssystem nach Anspruch 1, dadurch gekennzeichnet, daß der neue anfängliche Verschlüsselungsreihenfolgewert in einer verschlüsselten Form übertragen wird.

3. Datensicherheitssystem nach Anspruch 2, dadurch gekennzeichnet, daß der neue anfängliche Verschlüsselungsreihenfolgewert in einem Privatkanal in dem Rahmen übertragen wird.

4. Datensicherheitssystem in einem Übertragungssystem mit zeitmehrfachem Zugriff (TDMA), mit einer Vielzahl von Stationen, worin Übertragungssignale von einer Vielzahl von Stationen gesendet werden und empfangen werden, wobei die Übertragungssignale in der Form von aufeinanderfolgenden Rahmen gesendet werden und fixierte Abschnitte enthalten, die an entsprechenden fixierten Stellen innerhalb jedes Rahmens auftreten, und nicht fixierte Abschnitte enthalten, die nicht an fixierten Stellen innerhalb jeden Rahmens auftreten, wobei die fixierten Abschnitte weiterhin Zufallsabschnitte, die Zufallsdaten enthalten, und Nichtzufallsabschnitte einschließen, die Nichtzufallsdaten enthalten, und worin ursprüngliche, in den Übertragungsignalen zu übertragende Daten an einer Station verschlüsselt und an einer anderen Station empfangen werden, wobei die empfangenen verschlüsselten Daten an der anderen Station zum Wiedergewinnen der ursprünglichen Daten entschlüsselt werden, wobei das Datensicherheitssystem Verschlüsselungs- und Entschlüsselungs-Schaltungen an jeder Station aufweist, welche jeweils folgendes enthalten:

Speicherregistermittel (10, 20) zum Empfangen und Speichern eins anfänglichen Verschlüsselungsreihenfolgewerts, wobei der Wert des anfänglichen Verschlüsselungsreihenfolgewerts sich an jeder Verschlüsselungsschaltung synchron mit der Änderung des Werts an jeder Entschlüsselungsschaltung ändert;

einen Pseudo-Zufallszahl-PN-Reihenfolgegenerator (12, 22) zum Erzeugen von PN-Verschlüsselungsreihenfolgen, wobei jede PN-Verschlüsselungsreihenfolge bei dem Anfangsverschlüsselungsreihenfolgewert anfängt, der zu diesem Zeitpunkt in den Speicherregistermitteln (10, 20) gespeichert ist, und die PN-Reihenfolgegeneratoren (12, 22) in jeder der Verschlüsselungs- und Entschlüsselungsschaltungen die gleichen PN-Verschlüsselungsreihenfolgen für einen bestimmten anfänglichen Verschlüsselungsreihenfolgewert erzeugen; und

Mittel zum Laden der anfänglichen Verschlüsselungsreihenfolgewerte aus den Speicherregistermitteln (10, 20) jeder Verschlüsselungsschaltung in ihren entsprechenden PN-Reihenfolgegenerator (12, 22) synchron mit dem Laden des gleichen anfänglichen Verschlüsselungsreihenfolgewerts in den PN-Reihenfolgegenerator (12, 22) jeder Entschlüsselungsschaltung;

wobei das System weiterhin Mittel an wenigstens einer der Stationen zum Erzeugen des neuen anfänglichen Verschlüsselungsreihenfolgewerts, und Mittel zum Übertragen des erzeugten neuen anfänglichen Verschlüsselungsreihenfolgewerts in einem nicht verschlüsselten Zustand an eine andere der Stationen enthält, und das Datensicherheitssystem die nicht fixierten Abschnitte und die Zufallsabschnitte verschlüsselt, aber die Nichtzufallsabschnitte in einem nicht verschlüsselten Zustand überträgt.

5. Verfahren zum Übertragen von gesicherten Daten in einem Übertragungssystem mit zeitmehrfachem Zugriff (TDMA), worin Übertragungssignale von einer Vielzahl von Stationen in dem System übertragen und empfangen werden, wobei das Verfahren die folgenden Schritte enthält: Verschlüsseln von ursprünglichen Daten, Übertragen der verschlüsselten Daten in dem Übertragungssignal und Entschlüsseln der verschlüsselten Daten, um die ursprünglichen Daten zurückzugewinnen, wobei die Verschlüsselungs-Entschlüsselungsschritte jeweils die folgenden Schritte enthalten: Erzeugen von identischen PN-Verschlüsselungsreihenfolgen von einem anfänglichen Verschlüsselungsreihenfolgewert und Mischen der erzeugten Verschlüsselungsreihenfolgen mit ursprünglichen und verschlüsselten Daten, um die jeweils verschlüsselten und ursprünglichen Daten zu erhalten, wobei der Erzeugungsschritt für jeweils Verschlüsseln und Entschlüsseln die folgenden Schritte enthält: Speichern von identischen anfänglichen Verschlüsselungsreihenfolgenwerten, Erzeugen eines neuen anfänglichen Verschlüsselungsreihenfolgewerts an einer Station in dem Übertragungssystem, Übertragen des neuen anfänglichen Verschlüsselungsreihenfolgewerts in einen nicht verschlüsselten Zustand an einer der anderen Station in dem Übertragungssystem, und Ersetzen des gespeicherten anfänglichen Verschlüsselungsreihenfolgewerts mit dem neuen Anfangsverschlüsselungsreihenfolgewert, worin die Übertragungssignale in Form von aufeinanderfolgenden Rahmen übertragen werden, die fixierte Abschnitte, die an entsprechenden fixierten Abschnitten innerhalb jedes Rahmens auftreten und nicht fixierte Abschnitte einschließen, die nicht an fixierten Stellen innerhalb jedes Rahmens auftreten, wobei die fixierten Abschnitte weiterhin Zufallsabschnitte, die Zufallsdaten enthalten und Nichtzufallsabschnitte einschließen, die Nichtzufallsdaten enthalten, und worin das System die nicht fixierten Abschnitte und die Zufallsabschnitte verschlüsselt, aber die Nichtzufallsabschnitte in einem nicht verschlüsselten Zustand überträgt.

6. Verfahren nach Anspruch 5, dadurch gekennzeichnet, daß der Schritt des Übertragens des neuen anfänglichen Verschlüsselungsreihenfolgewerts die folgenden Schritte enthält: Verschlüsseln des neuen anfänglichen Verschlüsselungsreihenfolgewerts an einer Station in dem Übertragungssystem und Übertragen des verschlüsselten neuen anfänglichen Verschlüsselungsreihenfolgewerts an andere Stationen in dem Übertragungssystem in einem nicht verschlüsselten Zustand.

7. Datensicherheitssystem nach Anspruch 1, dadurch gekennzeichnet, daß das Übertragungssystem Bezugsignale zusätzlich zu den Übertragungssignalen überträgt und daß der erzeugte neue anfängliche Verschlüsselungsreihenfolgewert in den Bezugssignalen übertragen wird.

8. Datensicherheitssystem nach Anspruch 4, dadurch gekennzeichnet, daß Bezugssignale von einer Vielzahl von Stationen zusätzlich zu den Übertragungssignalen übertragen und empfangen werden und daß der erzeugte neue anfängliche Verschlüsselungsreihenfolgewert in den Bezugssignalen übertragen wird.

9. Verfahren nach Anspruch 5, dadurch gekennzeichnet, daß die Bezugssignale durch eine Vielzahl von Stationen zusätzlich zu den Übertragungssignalen übertragen und empfangen werden und daß der neue anfängliche Verschlüsselungsreihenfolgewert in den Bezugssignalen übertragen wird.

## Revendications

1. Système de sécurité des données dans un système de communication à accès multiple en temps partagé (TDMA) du type dans lequel les signaux de communication sont transmis et reçus à plusieurs stations, les signaux de communication étant transmis sous forme de trames successive et comportant des portions fixes se produisant à des positions fixes à l'intérieur de chaque trame et des portions non fixes ne se produisant pas à des positions fixes à l'intérieur de chaque trame, les portions fixes comprenant en outre des portions aléatoires qui contiennent une donnée aléatoire et des portions non aléatoires qui contiennent une donnée non aléatoire, et dans lequel la donnée transmise dans les signaux de communication est brouillée avant transmission et la donnée reçue dans les signaux de communication est déchiffrée après réception, le système de sécurité des données comprenant des circuits de brouillage (10, 12, 14) et de déchiffrement (20, 22, 24) afin de respectivement brouiller la donnée transmise et déchiffrer la donnée reçue, chaque circuit comprenant un générateur (12, 22) de suites de nombres pseudo-aléatoires, NP, pour générer des séquences de brouillage, un moyen (10, 20) de stockage de valeur initiale de séquence de brouillage, un moyen pour initialiser le générateur de suites NP (12, 22) à un état initial en conformité avec une valeur initiale stockée dans le moyen (10, 20) de stockage de valeur initiale de séquence de brouillage, une source de données et un mélangeur (14, 24) pour mélanger la donnée en réponse aux séquences de brouillage, les séquences de brouillage commençant à chaque initialisation du générateur (12, 22) de suites NP à partir de la valeur initiale et où chaque circuit comprend un moyen pour changer la valeur initiale stockée de la séquence de brouillage dans le moyen (10, 20) de stockage de valeur initiale en nouvelle valeur initiale stockée de séquence de brouillage qui est identique pour chaque circuit, de sorte qu'une nouvelle séquence est produite par chaque générateur de suites NP qui commence avec une telle nouvelle valeur initiale stockée de la séquence de brouillage, le système comprenant en outre un moyen à au moins l'une des stations pour générer la nouvelle valeur initiale de la séquence de brouillage et un moyen pour transmettre les signaux de la nouvelle valeur initiale générée de la séquence de brouillage, dans un état déchiffré, aux autres stations, le système de sécurité des données brouillant les portions non fixes et les portions aléatoires mais transmettant les portions non aléatoires à l'état déchiffré.

2. Système de sécurité de données selon la revendication 1, dans lequel la nouvelle valeur initiale de la séquence de brouillage est transmise sous forme chiffrée.

3. Système de sécurité des données selon la revendication 2, dans lequel la nouvelle valeur initiale de la séquence de brouillage est transmise dans une voie privée dans la trame.

4. Système de sécurité des données dans un système de communications à accès multiples en temps partagé (TDMA) du type comportant plusieurs stations, dans lequel les signaux de communications sont transmis et reçus dans plusieurs stations, les signaux de communications étant transmis sous forme de trames successives et comprenant des portions fixes qui se produisent à des positions fixes respectives à l'intérieur de chaque trame et des portions non fixes qui ne se produisent pas à des positions fixes à l'intérieur de chaque trame, les portions fixes comprenant en outre des portions aléatoires qui contiennent une donnée aléatoire et des portions non aléatoires qui contiennent une donnée non aléatoire, et où la donnée d'origine devant être transmise dans les signaux de communication est brouillée à une station, et reçue à une autre station, la donnée brouillée reçue étant déchiffrée à cette autre station pour récupération de la donnée d'origine, le système de sécurité des données ayant des circuits de brouillage et de déchiffrement à chaque station, les circuits de brouillage et de déchiffrement comprenant chacun:

—un moyen de registre de stockage (10, 20) pour recevoir et stocker une valeur initiale de séquence de brouillage, la valeur initiale de la séquence de brouillage à chaque circuit de brouillage changeant en synchronisme avec le changement de la valeur à chaque circuit de déchiffrement;

—un générateur (12, 22) de suites de nombres pseudo-aléatoires NP, pour générer des séquences de brouillage NP, chaque séquence de brouillage NP commençant à la valeur initiale de la séquence de brouillage actuellement stockée dans le moyen de registre de stockage (10, 20), les générateurs (12, 22) de séquences NP dans chacun des circuits de brouillage et de déchiffrement générant la même séquence de brouillage NP pour toute valeur initiale donnée de la séquence de brouillage; et

—un moyen pour charger les valeurs initiales de la séquence de brouillage à partir du moyen de registre de stockage (10, 20) de chaque circuit de brouillage dans son générateur respectif (12, 22) de suites NP en synchronisme avec le chargement de la même valeur initiale de la séquence de brouillage dans le générateur (12, 22) de suites NP de chaque circuit de déchiffrement;

—le système comprenant en outre un moyen dans au moins l'une des stations pour générer la nouvelle valeur initiale de la séquence de brouillage et un moyen pour transmettre la nouvelle valeur initiale de la séquence de brouillage à l'état déchiffré à d'autres stations, le système de sécurité des données brouillant les portions non fixes et les portions aléatoires mais transmettant les portions non aléatoires à l'état déchiffré.

5. Procédé pour communiquer des données de sécurité dans un système de communication à accès multiple en temps partagé (TDMA) du type dans lequel les signaux de communication sont transmis et reçus par plusieurs stations du système, le procédé étant du type comprenant les étapes consistant à brouiller une donnée d'origine, transmettre la donnée brouillée dans les signaux de communication et déchiffrer la donnée brouillée pour récupérer la donnée d'origine, les étapes de brouillage et de déchiffrement comprenant chacune les étapes consistant à générer des séquences identiques de brouillage NP à partir d'une valeur initiale de la séquence de brouillage et à mélanger les séquences de brouillage générées avec une donnée d'origine et déchiffrée pour obtenir la donnée brouillée et d'origine, respectivement, ladite étape de génération pour le brouillage et le déchiffrement comprenant les étapes consistant à stocker des valeurs initiales identiques de la séquence de brouillage, à générer une nouvelle valeur initiale de la séquence de brouillage à une station du système de communication, à transmettre la nouvelle valeur initiale de la séquence de brouillage à l'état déchiffré à d'autres stations du système de communication, et à remplacer la valeur initiale stockée de la séquence de brouillage par la nouvelle valeur initiale de la séquence de brouillage, où les signaux de communication sont transmis sous forme de trames successives comprenant des portions fixes qui se produisent à des positions fixes respectives à l'intérieur de chaque trame et des portions non fixes qui ne se produisent pas à des positions fixes à l'intérieur de chaque trame, les portions fixes comprenant en outre: des portions aléatoires qui contiennent une donnée aléatoire et des portions non aléatoires qui contiennent une donnée non aléatoire, et où le système brouille les portions non fixes et les portions aléatoires mais transmet les portions non aléatoires à l'état déchiffré.

6. Procédé selon la revendication 5, dans lequel l'étape consistant à transmettre la nouvelle valeur initiale de la séquence de brouillage comprend l'étape consistant à chiffrer la nouvelle valeur initiale de la séquence de brouillage dans une station du système de communication et à transmettre la nouvelle valeur initiale chiffrée de la séquence de brouillage à d'autres stations du système de communication à l'état déchiffré.

7. Système de sécurité des données selon la revendication 1, dans lequel le système de communication transmet des signaux de référence en plus des signaux de communication, et où la nouvelle valeur initiale générée de la séquence de brouillage est transmise dans les signaux de référence.

8. Système de sécurité des données selon la revendication 4, dans lequel des signaux de référence sont transmis et reçus par les stations en plus des signaux de communication, et où la nouvelle valeur initiale générée de la séquence de brouillage est transmise dans les signaux de référence.

9. Procédé selon la revendication 5, dans lequel des signaux de référence sont transmis et reçus par les stations en plus des signaux de communication, et dans lequel la nouvelle valeur initiale de la séquence de brouillage est transmise dans les signaux de référence.

## FIG.1 SCRAMBLER CIRCUIT

STARTING STATE DATA
VIA THE PRIVACY CHANNEL

10

22 BIT STORAGE REGISTER

- - -

12

START PULSE

CLOCK

22 BIT PN
SEQUENCE GENERATOR

14

SCRAMBLED
DATA

CLEAR TEXT
DATA

## FIG.2 DESCRAMBLER CIRCUIT

STARTING STATE DATA
VIA THE PRIVACY CHANNEL

20

22 BIT STORAGE REGISTER

- - -

22

START PULSE

CLOCK

22 BIT PN
SEQUENCE GENERATOR

24

CLEAR TEXT
DATA

SCRAMBLED
DATA

FIG. 3

SUPERFRAME

| FRAME 0 | FRAME I | FRAME 2 | FRAME 3 | ---- | FRAME M |

FRAME

PREASSIGNED — DAMA

| REFERENCE BURST I | REFERENCE BURST 2 | TRAFFIC BURST STATION N | TRAFFIC BURST STATION M | TRAFFIC BURST STATION P | | | TRAFFIC BURST STATION M | TRAFFIC BURST STATION P | TRAFFIC BURST STATION N | SHORT BURST |

EITHER REFERENCE BURST

| PREAMBLE | PRIVACY CHANNEL | FRAME ID | TRANSMISSION INSTANT CHANNEL | FRAME MANAGEMENT COMMAND |

SHORT BURST

| PREAMBLE | MONITOR REQUEST CHANNEL | SIGNALLING CHANNEL |

FIRST TRAFFIC BURST FROM EACH LOCAL STATION

| PREAMBLE | STATUS | ORDERWIRE | USER SUBBURST I | USER SUBBURST2 | USER SUBBURST 3 |

ALL OTHER TRAFFIC BURSTS

| PREAMBLE | USER SUBBURST I | USER SUBBURST 2 | USER SUBBURST 3 |

PREAMBLE

| GUARD TIME | BIT REC. SEQUENCE | UNIQUE WORD | TYPE ID | STATION ID |

EP 0 100 106 B1

2